# EUROPÄISCHE PATENTSCHRIFT

(11) **EP 3 454 111 B1**
(45) Veröffentlichungstag und Bekanntmachung des Hinweises auf die Patenterteilung: **10.11.2021**
(21) Anmeldenummer: 18189959.2
(22) Anmeldetag: 21.08.2018
(51) Int. Cl.: G02F 1/01, G02F 1/225, G02F 1/21

(54) **MACH-ZEHNDER-MODULATOR MIT REGELVORRICHTUNG ZUR ARBEITSPUNKTREGELUNG SOWIE VERFAHREN ZUR ARBEITSPUNKTREGELUNG**
MACH-ZEHNDER MODULATOR WITH REGULATOR FOR WORKING POINT CONTROL AND METHOD FOR WORKING POINT CONTROL
MODULATEUR MACH-ZEHNDER POURVU DE DISPOSITIF DE RÉGLAGE DESTINÉ AU RÉGLAGE DE POINT DE FONCTIONNEMENT AINSI QUE PROCÉDÉ DE RÉGLAGE DE POINT DE FONCTIONNEMENT

(30) Priorität: 11.09.2017 DE 102017008541
(43) Veröffentlichungstag der Anmeldung: 13.03.2019
(73) Patentinhaber: Karlsruher Institut für Technologie, 76131 Karlsruhe (DE)
(72) Erfinder: SCHNEIDER, Marc, 76297 Stutensee (DE)
(74) Vertreter: Müller-Boré & Partner Patentanwälte PartG mbB

(56) Entgegenhaltungen:
- EP-A1- 1 873 575
- US-A1- 2006 034 616
- US-A1- 2008 106 780
- US-A1- 2015 277 207

## Beschreibung

Die Erfindung betrifft einen Mach-Zehnder-Modulator mit einer Regelvorrichtung zur Arbeitspunktregelung und ein Verfahren zur Arbeitspunktregelung eines solchen Mach-Zehnder-Modulators.

Die Erfindung liegt auf dem Gebiet der Kommunikationstechnologie, insbesondere auf den Gebieten der optischen Datenübertragungstechnologien. Bei schnellen optischen Übertragungsstrecken werden nicht mehr direkt modulierte, sondern extern modulierte Laser eingesetzt, wobei die externe Modulation üblicherweise durch Mach-Zehnder-Modulatoren erfolgt. Hierfür werden im Wesentlichen Mach-Zehnder-Modulatoren auf Basis von Lithium-Niobat eingesetzt. Die fortschreitende Entwicklung der integrierten Siliziumphotonik ermöglicht jedoch auch Mach-Zehnder-Modulatoren auf Siliziumbasis in Form von photonischen Chips.

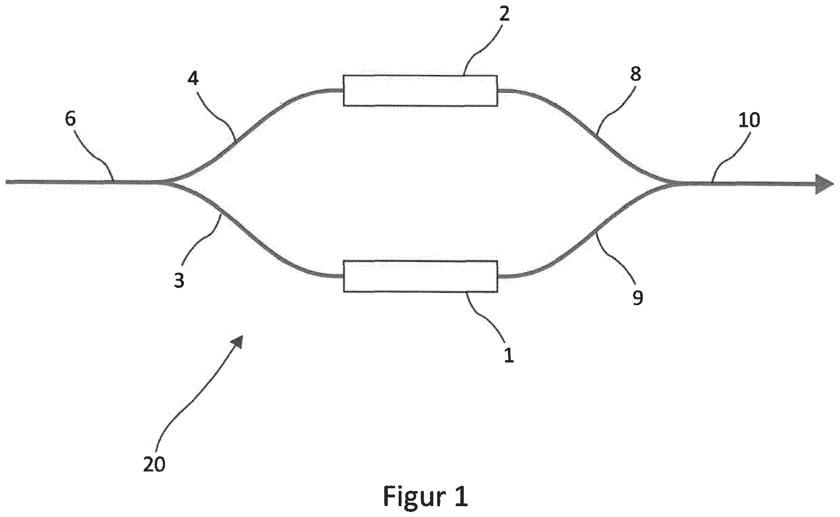

Ein üblicher Mach-Zehnder-Modulatoren (20) ist in Figur 1 dargestellt und funktioniert auf folgende Weise: Licht aus einem Eingangswellenleiter (6) wird aufgespalten, so dass jeweils die Hälfte in einem oberen Arm (4) und einem unteren Arm (3) jeweils in einem Wellenleiter geführt wird. Das Licht im oberen Arm (4) wird durch einen schnellen Phasenmodulator (2) geführt, mit dem in Abhängigkeit eines von außen angelegen, elektrischen Signals die Lichtgeschwindigkeit des durchtretenden, und damit die Phase des austretenden Lichts geändert wird. Ein gleichartiger Phasenmodulator (1) kann sich zur Effizienzsteigerung im unteren Arm befinden. Das Licht aus beiden Armen wird über die zweiten Arme (8, 9) wieder zusammen geführt. Je nach relativer Phasenlage der Lichtanteile aus dem oberen Arm (4, 8) und dem unteren Arm (3, 9) ergibt sich konstruktive oder destruktive Interferenz und eine Amplitudenmodulation des Lichts im Ausgangswellenleiter (10) in Abhängigkeit des an die Phasenmodulatoren (1, 2) angelegten elektrischen Signals.

Hierbei können Unterschiede in den einzelnen Armen und Temperaturdifferenzen eine Regelung des Arbeitspunktes des MZ-Modulators erforderlich machen, so dass am Ausgang das gewünschte Signal erzeugt wird. Der übliche Arbeitspunkt eines MZ-Modulators ist ein oder der Quadraturpunkt, bei dem die Ausgangsintensität gerade in der Mitte zwischen minimaler und maximaler Ausgangsintensität liegt. Üblicherweise hat die entsprechende Messkurve dort ihre größte Steigung und beste Linearität. Ziel ist es, den Modulator mit einer Arbeitspunktregelung in einem solchen Arbeitspunkt zu halten.

Bei herkömmlichen Mach-Zehnder-Modulatoren lässt sich eine solche Arbeitspunktregelung mit Hilfe des Ausgangssignals bewerkstelligen, indem ein Teil des Ausgangssignals abgezweigt und auf eine Photodiode geleitet wird. Die Arbeitspunktregelung versucht hierbei die beiden Phasenmodulatoren so anzusteuern, dass das Ausgangssignal optimal wird.

US 2015/277207 A1 beschreibt ein Ausgangsüberwachungsverfahren für einen optischen Modulator, umfassend: Verzweigen von Licht in erstes und zweites Licht; Modulieren einer Phase des ersten Lichts in einem ersten Wellenleiter; Modulieren einer Phase des zweiten Lichts in einem zweiten Wellenleiter; Multiplexen des ersten und des zweiten Lichts, um Interferenzlicht zu erzeugen, und Ausgeben des Interferenzlichts von einem ersten und zweiten Ausgangsport; Erfassen einer Differenz oder eines Verhältnisses zwischen einem Teil des Interferenzlichts von dem ersten Ausgangsport und einem Teil des Interferenzlichts von dem zweiten Ausgangsport; und Einstellen eines Arbeitspunkts von Licht basierend auf der erfassten Differenz oder dem erfassten Verhältnis; und Steuern der Phasenmodulation von Folgelicht, das sich durch den ersten und den zweiten Wellenleiter ausbreitet, um den Arbeitspunkt konstant zu halten.

US 2006/034616 A1 beschreibt eine automatische Vorspannungssteuerung für einen optischen Modulator, umfassend einen Treiber zum Liefern eines elektrischen Datensignals an den Modulator und Vorspannungsmittel zum Liefern einer Vorspannung an den Modulator. Ein Mikroprozessor liefert ein niederfrequentes digitales Modulationssignal, das von einem Digital-Analog-Wandler in ein analoges Modulationssignal umgewandelt wird. Das analoge Modulationssignal wird an die Vorspannungsmittel (um die Vorspannung zu modulieren) oder an den Treiber (um die Amplitude des Datensignals zu modulieren) angelegt. Intensitätserfassungsmittel zum Erfassen der Intensität des vom Modulator abgegebenen Lichts sind vorgesehen, und ein Analog-Digital-Wandler wandelt die Ausgabe der Intensitätserfassungsmittel in ein digitales Intensitätssignal um, das an den Mikroprozessor weitergeleitet wird. Das digitale Intensitätssignal wird analysiert, und die Vorspannungsmittel werden angewiesen, die Vorspannung auf der Basis des analysierten Signals einzustellen.

Es ist daher die Aufgabe der vorliegenden Erfindung, einen Mach-Zehnder-Modulator mit einem einfachen und effizienten Aufbau zur Arbeitspunktregelung, sowie ein effizientes Verfahren zur Arbeitspunktregelung bereitzustellen.

Diese Aufgabe wird insbesondere durch einen Mach-Zehnder-Modulator mit einer Regelvorrichtung gemäß Anspruch 1 und einem Verfahren zur Arbeitspunktregelung für einen Mach-Zehnder-Modulator gemäß Anspruch 15 gelöst. Die Erfindung ist hierbei durch die unabhängigen Ansprüche definiert, wobei bevorzugte Ausführungsformen den Gegenstand der abhängigen Ansprüche bilden.

Ein Aspekt betrifft einen Mach-Zehnder-Modulator mit einer Regelvorrichtung zur Arbeitspunktregelung, umfassend einen Mach-Zehnder-Modulator und einer Regelvorrichtung. Der Mach-Zehnder-Modulator umfasst eine optische Teilereinrichtung, welche ausgelegt ist, ein optisches Eingangssignal in optische Teilsignale auf mindestens zwei optische Führungsarme zu verteilen, mindestens eine Modulationseinrichtung, welche als optischer Phasenmodulator zur Phasenmodulation des optischen Eingangssignals in mindestens einem der mindestens zwei optischen Führungsarme ausgelegt ist, und eine optische Kombiniereinrichtung, wobei die optische Kombiniereinrichtung ausgelegt ist, die optischen Teilsignale der mindestens zwei optischen Führungsarme zu kombinieren. Die Regelvorrichtung umfasst eine Signal-Vergleichseinrichtung, welche ausgelegt ist, die optischen Teilsignale der mindestens zwei optischen Führungsarme zu vergleichen, mindestens eine Regel-Modulationseinrichtung, welche in mindestens einem der mindestens zwei optischen Führungsarme angeordnet ist, und eine Regelschaltung, wobei die Regelschaltung konfiguriert ist, einen Arbeitspunkt des Mach-Zehnder-Modulators durch Ansteuerung der mindestens einen Regel-Modulationseinrichtung basierend auf dem Vergleich der optischen Teilsignale durch die Signal-Vergleichseinrichtung zu regeln. Hierdurch wird eine effiziente und einfache Arbeitspunktregelung ermöglicht, welche nicht einen Teil eines optischen Ausgangssignals benötigt bzw. abzweigt.

Das optische Eingangssignal wird hierbei an die optische Teilereinrichtung geleitet, welche ausgelegt ist, das optische Eingangssignal auf mindestens zwei optische Führungsarme zu verteilen bzw. das optische Eingangssignal in eine Anzahl von optischen Teilsignalen zu zerteilen, wobei die Anzahl der optischen Teilsignale der Anzahl von optischen Führungsarmen entspricht und jeweils ein optisches Teilsignal auf jeweils einen Führungsarm der mindestens zwei optische Führungsarme zu leiten. Das optische Eingangssignal kann bzw. die optischen Teilsignale können hierbei insbesondere durch Glasfasern an die optische Teilereinrichtung geleitet werden. Die mindestens zwei optischen Führungsarme können zumindest teilweise als Glasfasern bzw. auf Basis von Glasfasern ausgebildet sein. Hierbei kann es vorteilhaft sein, die mindestens zwei optischen Führungsarme aus dem gleichem Material bereitzustellen.

Der Mach-Zehnder-Modulator kann insbesondere durch monolithische Integration auf photonischen Chips und Bauteilen realisiert werden. Das optische Eingangssignal kann hierbei insbesondere durch Wellenleiter an die optische Teilereinrichtung geleitet werden und/oder die mindestens zwei optischen Führungsarme können zumindest teilweise als Wellenleiter bzw. auf Basis von Wellenleitern ausgebildet sein. Insbesondere gilt im Rahmen dieser Beschreibung, dass im Fall einer Realisierung des Mach-Zehnder-Modulators durch monolithische Integration auf einem photonischen Chip und/oder Bauteilen bzw. auf photonischen Chips und/oder Bauteilen optische Leitungen bzw. optische Signalstrecken, beispielsweise zur Übertragung von optischen Eingangs- und/oder Ausgangssignalen, des Mach-Zehnder-Modulators zumindest teilweise auf Basis von Glasfasern und/oder auf Basis von Wellenleitern ausgebildet sein können. Die Wellenleiter können hierbei insbesondere zumindest teilweise auf Basis von Silizium und/oder Siliziumnitrid und/oder Lithiumniobat ausgebildet sein.

Die optische Teilereinrichtung kann mindestens einen optischen Signaleingang aufweisen, ist jedoch nicht auf eine bestimmte Anzahl von optischen Signaleingängen beschränkt. Das optische Eingangssignal wird hierbei über den mindestens einen optischen Signaleingang an die optische Teilereinrichtung geleitet, und durch diese auf die mindestens zwei optischen Führungsarme verteilt. Die optische Teilereinrichtung kann hierbei als Y-Verteiler und/oder als Multimode-Interferometer ausgebildet sein.

Die mindestens eine Modulationseinrichtung ist als Phasenmodulator ausgebildet. Hierbei kann jeder optische Führungsarm der mindestens zwei optischen Führungsarme eine beliebige Anzahl von Phasenmodulatoren aufweisen. Die Phasenmodulatoren können ausgebildet sein, eine Lichtgeschwindigkeit eines die mindestens eine Modulationseinrichtung durchlaufenden optischen Teilsignals zu reduzieren oder zu erhöhen, wodurch eine Phase des durchlaufenden optischen Signals nach Austritt aus dem Phasenmodulator beeinflusst wird. Hierfür kann ein Phasenmodulator beispielsweise aufgrund eines angelegten elektrischen bzw. magnetischen bzw. elektro-magnetischen Signals die Lichtgeschwindigkeit des durchlaufenden optischen Signals regeln. Ferner können thermische oder mechanische Phasenmodulatoren verwendet werden. Bevorzugt weisen ein erster optischer Führungsarm und ein zweiter optischer Führungsarm jeweils einen im Wesentlichen identischen Phasenmodulator auf, wodurch eine effiziente Phasenmodulation ermöglicht wird.

Die optische Kombiniereinrichtung ist ausgelegt, Signale bzw. die optischen Teilsignale, welche über die mindestens zwei optischen Führungsarme übermittelt werden, zu kombinieren. Hierzu kann die optische Kombiniereinrichtung eine Anzahl von Signaleingängen der optischen Kombiniereinrichtung aufweisen, wobei die Anzahl von Signaleingängen der optischen Kombiniereinrichtung gleich groß oder größer ist als die Anzahl von optischen Führungsarmen. Insbesondere ist jeweils ein Signaleingang der optischen Kombiniereinrichtung mit jeweils einem optischen Führungsarm verbunden. Ferner ist die optische Kombiniereinrichtung ausgelegt, die optischen Teilsignale, welche über die Führungsarme übermittelt werden, an den Signaleingängen der optischen Kombiniereinrichtung zu empfangen und zu kombinieren. Insbesondere wird hierdurch das optische Eingangssignal, welches durch die optische Teilereinrichtung auf die mindestens zwei optischen Führungsarme verteilt wird, durch die optische Kombiniereinrichtung zu einem optischen Ausgangssignal kombiniert. Insbesondere entsteht das optische Ausgangssignal durch eine zumindest teilweise Überlagerung der optischen Teilsignale in den optischen Führungsarmen. Ist der Mach-Zehnder-Modulator beispielsweise mit zwei optischen Führungsarmen ausgebildet, wobei das Licht aus beiden Führungsarmen die gleiche Phasenlage aufweist, entsteht konstruktive Interferenz, und das optische Ausgangssignal ist hoch. Ist der Mach-Zehnder-Modulator beispielsweise mit zwei optischen Führungsarmen ausgebildet, wobei das Licht aus beiden Führungsarmen einen Phasenunterschied von 180° aufweist, entsteht destruktive Interferenz, und das optische Ausgangssignal ist niedrig, wobei das optische Ausgangssignal bevorzugt vollständig verschwindet.

Die optische Kombiniereinrichtung weist mindestens einen ersten Signalausgang auf. Die optische Kombiniereinrichtung kann hierfür als Y-Koppler, bevorzugt als Multimode-Interferometer ausgebildet sein.

Die Regelvorrichtung ist ausgelegt, einen Arbeitspunkt des Mach-Zehnder-Modulators zu regeln. Hierzu umfasst die Regelvorrichtung eine Signal-Vergleichseinrichtung, welche ausgelegt ist, die optischen Teilsignale der mindestens zwei optischen Führungsarme zu vergleichen. Insbesondere können während des Betriebs des Mach-Zehnder-Modulators Umwelteinflüsse physikalische Eigenschaften der optischen Teilsignale beeinträchtigen. So können beispielsweise Temperaturdifferenzen der mindestens zwei optischen Führungsarme oder beeinträchtigende externe elektromagnetische Felder beispielsweise eine relative Phasenverschiebung zwischen den optischen Teilsignalen bewirken, wodurch das kombinierte optische Ausgangssignal bzw. der Arbeitspunkt des Mach-Zehnder-Modulators verändert wird. Die Signal-Vergleichseinrichtung ist daher konfiguriert, jedes der optischen Teilsignale bzw. physikalische Eigenschaften jedes der optischen Teilsignale zu messen und/oder die optischen Teilsignale bzw. die physikalischen Eigenschaften der optischen Teilsignale miteinander zu vergleichen. Somit können Abweichungen zwischen den optischen Teilsignalen registriert bzw. gemessen werden.

Die Regelvorrichtung umfasst ferner mindestens eine Regel-Modulationseinrichtung, wobei die mindestens eine Regel-Modulationseinrichtung als Phasenmodulator ausgebildet ist. Hierbei kann jeder optische Führungsarm der mindestens zwei optischen Führungsarme eine beliebige Anzahl von Regel-Modulationseinrichtungen aufweisen. Die mindestens eine Regel-Modulationseinrichtung kann ausgebildet sein, eine Lichtgeschwindigkeit eines die mindestens eine Regel-Modulationseinrichtung durchlaufenden optischen Teilsignals zu reduzieren oder zu erhöhen, wodurch eine Phase des durchlaufenden optischen Teilsignals nach Austritt aus der mindestens einen Regel-Modulationseinrichtung beeinflusst wird. Hierfür kann die mindestens eine Regel-Modulationseinrichtung beispielsweise aufgrund eines angelegten elektrischen bzw. magnetischen bzw. elektro-magnetischen Signals die Lichtgeschwindigkeit des durchlaufenden optischen Signals regeln. Ferner können thermische, insbesondere thermooptische, oder mechanische Phasenmodulatoren verwendet werden. Ist jeweils mindestens eine Regel-Modulationseinrichtung in mehr als einem optischen Führungsarm vorgesehen, sind die Regel-Modulationseinrichtungen bevorzugt im Wesentlichen identisch ausgebildet, wodurch eine effiziente Phasenmodulation ermöglicht wird.

Die Regelvorrichtung umfasst ferner eine Regelschaltung, welche konfiguriert ist, den Arbeitspunkt des Mach-Zehnder-Modulators mindestens durch Ansteuerung der mindestens einen Regel-Modulationseinrichtung basierend auf dem Vergleich der optischen Teilsignale durch die Signal-Vergleichseinrichtung bzw. auf einem Vergleichsausgangssignals der Signal-Vergleichseinrichtung zu regeln. Insbesondere kann die Regelschaltung den Vergleich der optischen Teilsignale evaluieren und die mindestens eine Regel-Modulationseinrichtung derart ansteuern, so dass einer potentiellen Beeinträchtigung des Arbeitspunktes des Mach-Zehnder-Modulators, beispielsweise durch Umwelteinflüsse, entgegengewirkt wird bzw. eine solche potentielle Beeinträchtigung im Wesentlichen ausgeglichen wird. Die Signal-Vergleichseinrichtung und die Regelvorrichtung können hierbei insbesondere als eine Einheit ausgebildet sein, welche konfiguriert ist, alle Funktionen der Signal-Vergleichseinrichtung und der Regelvorrichtung auszuführen.

Vorzugsweise ist die Signal-Vergleichseinrichtung und/oder die mindestens eine Regel-Modulationseinrichtung zwischen der optischen Teilereinrichtung und der mindestens einen Modulationseinrichtung angeordnet. Hierbei ist "angeordnet" nicht beschränkend im Sinne einer geometrischen Anordnung zu verstehen. Vielmehr ist hierbei zu verstehen, dass die Signal-Vergleichseinrichtung die optischen Teilsignale in den mindestens zwei optischen Führungsarmen vergleichen kann, nachdem die optischen Teilsignale durch die optische Teilereinrichtung auf die mindestens zwei optischen Führungsarme verteilt wurden, und bevor die optischen Teilsignale die mindestens eine Modulationseinrichtung durchlaufen haben bzw. eine Phase der optischen Teilsignale durch die mindestens eine Modulationseinrichtung moduliert wurden. Ferner ist hierbei zu verstehen, dass die mindestens eine Regel-Modulationseinrichtung die optischen Teilsignale in den mindestens zwei optischen Führungsarmen modulieren kann, nachdem die optischen Teilsignale durch die optische Teilereinrichtung auf die mindestens zwei optischen Führungsarme verteilt wurden, und bevor die optischen Teilsignale die mindestens eine Modulationseinrichtung durchlaufen haben bzw. eine Phase der optischen Teilsignale durch die mindestens eine Modulationseinrichtung moduliert wurden.

Besonders bevorzugt sind die Signal-Vergleichseinrichtung und die mindestens eine Regel-Modulationseinrichtung derart angeordnet, so dass mindestens ein optisches Teilsignal der optischen Teilsignale die Regel-Modulationseinrichtung durchläuft bzw. die Phase von mindestens einem optischen Teilsignal der optischen Teilsignale durch die Regel-Modulationseinrichtung moduliert wird, bevor die optischen Teilsignale durch die Signal-Vergleichseinrichtung verglichen werden.

Vorzugsweise umfasst die Signal-Vergleichseinrichtung mindestens zwei Leistungsteiler, wobei in jedem der mindestens zwei optischen Führungsarme ein Leistungsteiler der mindestens zwei Leistungsteiler angeordnet ist, wobei jeder Leistungsteiler der mindestens zwei Leistungsteiler ausgelegt ist, jeweils ein Referenzsignal von dem jeweiligen optischen Teilsignal abzuleiten. Die Signal-Vergleichseinrichtung umfasst ferner eine optische Referenzsignal-Kombiniereinrichtung, welche mit den mindestens zwei Leistungsteilern verbunden ist und ausgelegt ist, die mindestens zwei Referenzsignale in mindestens zwei Messsignale umzuwandeln, und eine Photodetektoreinrichtung, welche ausgelegt ist, die mindestens zwei Messsignale zu empfangen.

Die mindestens zwei Leistungsteiler sind hierbei ausgelegt, von jeweils einem optischen Teilsignal ein Referenzsignal abzuleiten, wobei jedes Referenzsignal gleiche Phaseninformationen und eine geringere Leistung bzw. Amplitude wie das jeweilige optische Teilsignal aufweist, von dem das Referenzsignal abgeleitet wurde. Somit leiten die mindestens zwei Leistungsteiler mindestens zwei Referenzsignale ab, welche an die optische Referenzsignal-Kombiniereinrichtung geführt werden. Bevorzugt ist der Mach-Zehnder-Modulator konfiguriert, so dass die zurückgelegte Strecke jedes optischen Teilsignals zwischen der optischen Teilereinrichtung und des jeweiligen Leistungsteilers der mindestens zwei Leistungsteiler im Wesentlichen identisch sind. Bevorzugt ist die Signal-Vergleichseinrichtung konfiguriert, so dass die zurückgelegte Strecke jedes Referenzsignals zwischen dem jeweiligen Leistungsteiler der mindestens zwei Leistungsteiler und der optischen Referenzsignal-Kombiniereinrichtung im Wesentlichen identisch sind.

Die optische Referenzsignal-Kombiniereinrichtung ist ausgelegt, die Referenzsignale, welche von der Referenzsignal-Kombiniereinrichtung empfangen werden, zu kombinieren. Hierzu kann die optische Referenzsignal-Kombiniereinrichtung eine Anzahl von Signaleingängen der optischen Referenzsignal-Kombiniereinrichtung aufweisen, wobei die Anzahl von Signaleingängen der optischen Referenzsignal-Kombiniereinrichtung gleich groß oder größer ist als die Anzahl der mindestens zwei Leistungsteiler. Insbesondere ist jeweils ein Signaleingang der optischen Referenzsignal-Kombiniereinrichtung mit jeweils einem Leistungsteiler verbunden. Ferner ist die optische Referenzsignal-Kombiniereinrichtung ausgelegt, die Referenzsignale an den Signaleingängen der optischen Referenzsignal-Kombiniereinrichtung zu empfangen und zu kombinieren. Insbesondere umfasst die optische Referenzsignal-Kombiniereinrichtung mindestens zwei Signalausgänge, wobei die Referenzsignale durch die optische Referenzsignal-Kombiniereinrichtung zu mindestens zwei Messsignalen kombiniert bzw. umgewandelt werden. Die optische Referenzsignal-Kombiniereinrichtung kann insbesondere ausgelegt sein, so dass, wenn sich der Mach-Zehnder-Modulator im richtigen Arbeitspunkt befindet, die mindestens zwei Messsignale im Wesentlichen identisch sind. Somit kann eine Abweichung des Mach-Zehnder-Modulators von dem korrekten Arbeitspunkt einfach und effizient registriert werden. Die optische Referenzsignal-Kombiniereinrichtung kann insbesondere auch ausgelegt sein, so dass, wenn sich der Mach-Zehnder-Modulator im richtigen Arbeitspunkt befindet, mindestens ein Messsignal maximal ist und mindestens ein Messsignal minimal ist bzw. verschwindet. Somit kann eine Abweichung des Mach-Zehnder-Modulators von dem korrekten Arbeitspunkt einfach und effizient registriert werden, und ferner kann hierdurch auch die Richtung einer benötigten Korrektur-Phasenmodulation zur Wiederherstellung des korrekten Arbeitspunktes ermittelt werden, wodurch die Effizienz der Arbeitspunktregelung ferner erhöht wird.

Die Photodetektoreinrichtung ist ausgelegt, die mindestens zwei Messsignale zu empfangen und in mindestens ein elektrisches Messdatensignal umzuwandeln. Hierfür weist die Photodetektoreinrichtung mindestens einen Messdatenausgang auf, an dem das mindestens eine elektrische Messdatensignal weitergeleitet wird. Insbesondere ist der mindestens eine Messdatenausgang mit der Regelschaltung verbunden und übermittelt der Regelschaltung das mindestens eine elektrische Messdatensignal.

Vorzugsweise ist mindestens eine Regel-Modulationseinrichtung der mindestens einen Regel-Modulationseinrichtung in einem der mindestens zwei optischen Führungsarme zwischen einem der mindestens zwei Leistungsteiler und der optischen Teilereinrichtung angeordnet. Hierbei ist "angeordnet" nicht beschränkend im Sinne einer geometrischen Anordnung zu verstehen. Vielmehr ist hierbei zu verstehen, dass die mindestens eine Regel-Modulationseinrichtung der mindestens einen Regel-Modulationseinrichtungen eine Phase von mindestens einem optischen Teilsignal in mindestens einem der mindestens zwei optischen Führungsarmen modulieren kann, nachdem die optischen Teilsignale durch die optische Teilereinrichtung auf die mindestens zwei optischen Führungsarme verteilt wurden, und bevor die optischen Teilsignale die mindestens zwei Leistungsteiler durchlaufen haben bzw. jeweils ein Referenzsignal für jedes der optische Teilsignale von den mindestens zwei Leistungsteilern abgeleitet wurde. Hierdurch wird insbesondere mindestens ein Feedforward-Loop innerhalb des Mach-Zehnder-Modulators zur Arbeitspunktregelung ermöglicht.

Vorzugsweise ist jeder der mindestens zwei Leistungsteiler ausgelegt, maximal 20%, bevorzugt maximal 5%, weiter bevorzugt maximal 2%, am meisten bevorzugt maximal 1% einer Leistung des jeweiligen optischen Teilsignals abzuleiten. Ferner ist vorzugsweise jeder der mindestens zwei Leistungsteiler ausgelegt, mindestens 0,01%, bevorzugt mindestens 0,05% einer Leistung des jeweiligen optischen Teilsignals abzuleiten. Hierdurch wird sichergestellt, dass der Signal-Vergleichseinrichtung genügend starke optische Signale zum Vergleich der optischen Teilsignale zugeführt werden, und dass genügend starke optische Teilsignale an die optische Kombiniereinrichtung weitergeführt werden.

Vorzugsweise sind die mindestens zwei Leistungsteiler im Wesentlichen identisch ausgebildet. Hierdurch wird eine verlässlich identische Ableitung der mindestens zwei Referenzsignale ermöglicht.

Vorzugsweise ist jeder der mindestens zwei Leistungsteiler als Y-Teiler und/oder als Richtkoppler und/oder als Multimode-Interferometer ausgebildet.

Vorzugsweise sind die optische Referenzsignal-Kombiniereinrichtung und die optische Kombiniereinrichtung im Wesentlichen identisch ausgebildet. Hierdurch werden die mindestens zwei Referenzsignale und die mindestens zwei optischen Teilsignale von im Wesentlich identischen optischen Bauteilen kombiniert, wodurch eine verlässliche und effiziente Arbeitspunktregelung ermöglicht wird.

Vorzugsweise ist die optische Teilereinrichtung und/oder die optische Kombiniereinrichtung und/oder die optische Referenzsignal-Kombiniereinrichtung als Multimode-Interferometer ausgebildet.

Vorzugsweise weist die Photodetektoreinrichtung mindestens zwei Photodioden auf, wobei jede der mindestens zwei Photodioden ausgelegt ist, jeweils eines der mindestens zwei Messsignale zu empfangen, wobei jede der mindestens zwei Photodioden einen Messdatenausgang aufweist, welcher mit der Regelschaltung verbunden ist. Insbesondere können die mindestens zwei Photodioden identisch ausgelegt sein. Somit kann jedes der mindestens zwei Messsignale von jeweils einer der mindestens zwei Photodioden in ein elektrisches Messdatensignal umgewandelt werden. Die Photodetektoreinrichtung ist jedoch nicht auf Photodioden beschränkt, und somit können auch andere Photodetektoren verwendet werden, beispielsweise Photodetektoren basierend auf dem äußeren und/oder inneren photoelektrischen Effekt.

Vorzugsweise ist die Photodetektoreinrichtung als symmetrischer bzw. differentieller Photodetektor ausgebildet, wobei der symmetrische bzw. differentielle Photodetektor mindestens einen Messdatenausgang aufweist, welcher mit der Regelschaltung verbunden ist. Somit können die optischen Messsignale direkt von dem Photodetektor in ein elektrisches Differenzsignal umgewandelt werden, wobei die Photodetektoreinrichtung hierbei den Vergleich zwischen den optischen Teilsignalen ermitteln kann.

Vorzugsweise ist die mindestens eine Regel-Modulationseinrichtung als thermooptischer Phasenmodulator ausgebildet.

Vorzugsweise umfasst die mindestens eine Regel-Modulationseinrichtung mindestens zwei Regel-Modulationseinrichtungen, wobei jeder der mindestens zwei optischen Führungsarme mindestens eine der mindestens zwei Regel-Modulationseinrichtungen aufweist. Hierdurch wird eine effiziente Arbeitspunktregelung ermöglicht.

Vorzugsweise umfasst die optische Kombiniereinrichtung einen optischen Monitorsignalausgang, welcher mit einer Monitor-Photodiode verbunden ist, wobei die Monitor-Photodiode ausgelegt ist, ein optisches Monitorsignal an dem optischen Monitorsignalausgang zu empfangen und der Regelschaltung ein hierauf basierendes elektrisches Monitordatensignal zuzuführen, wobei die Regelschaltung konfiguriert ist, einen Arbeitspunkt des Mach-Zehnder-Modulators durch Ansteuerung der mindestens einen Regel-Modulationseinrichtung basierend auf dem Vergleich der optischen Teilsignale durch die Signal-Vergleichseinrichtung und dem elektrischen Monitordatensignal der Monitor-Photödiode zu regeln. Somit wird eine Arbeitspunktregelung basierend auf den optischen Teilsignalen in den mindestens zwei optischen Führungsarmen und basierend auf dem optischen Monitorsignal nach der optischen Kombiniereinrichtung ermöglicht, d.h. basierend auf einem Feedforward und einem Feedback-Loop. Ferner könnte hierbei die Regelschaltung den Arbeitspunkt basierend auf dem Vergleich der optischen Teilsignale ermitteln und den Arbeitspunkt basierend auf dem Monitordatensignal ermitteln, wobei ein Vergleich beider Arbeitspunktermittlungen einen Rückschluss auf potentielle Umwelteinflüsse auf einen Abschnitt des Mach-Zehnder-Modulators zwischen der Regelvorrichtung und der Monitor-Photodiode, beispielsweise eine Überhitzung der mindestens einen Modulationseinrichtung; ermöglicht.

Vorzugsweise umfasst die optische Kombiniereinrichtung einen optischen Transmissionssignalausgang, wobei der Mach-Zehnder-Modulator einen Transmitter-Modus aufweist, in dem ein optisches Transmissionssignal basierend auf dem optischen Eingangssignal an dem optischen Transmissionssignalausgang erzeugt wird, und weiter bevorzugt einen Receiver-Modus aufweist, in dem das optische Eingangssignal an die Monitor-Photodiode gelenkt ist und insbesondere in ein elektrisches Datenausgangssignal umgewandelt wird.

In dem Transmitter-Modus ist die optische Teilereinrichtung konfiguriert, das optische Eingangssignal auf die mindestens zwei optischen Führungsarme zu verteilen. Die mindestens eine Modulationseinrichtung ist ausgelegt, Phasen der getrennten optischen Teilsignale, welche entlang der mindestens zwei optischen Führungsarme übermittelt werden, zu modulieren. Die optische Kombiniereinrichtung ist konfiguriert, die optischen Teilsignale nach deren Phasenmodulation zu kombinieren, wobei die mindestens eine Modulationseinrichtung und die optische Kombiniereinrichtung ausgelegt sind, so dass das optische Transmissionssignal an dem optischen Transmissionssignalausgang erzeugt wird. Hierbei können durch eine kontrollierte Phasenmodulation Daten auf das Transmissionssignal übertragen werden und über den optischen Transmissionssignalausgang gesendet werden. Die Monitor-Photodiode, welche mit dem Monitorsignalausgang verbunden ist, kann in dem Transmitter-Modus zur Regelung eines Arbeitspunktes des Mach-Zehnder-Modulators verwendet werden.

In dem Receiver-Modus ist die optische Teilereinrichtung konfiguriert, das optische Eingangssignal auf die mindestens zwei optischen Führungsarme zu verteilen. Die mindestens eine Modulationseinrichtung und die optische Kombiniereinrichtung sind ausgelegt, so dass das optische Monitorsignal unter Berücksichtigung der abgeleiteten Referenzsignale im Wesentlichen vollständig dem optischen Eingangssignal entspricht, wobei das optische Monitorsignal im Wesentlichen vollständig an den optischen Monitorsignalausgang geleitet wird. Die Monitor-Photodiode ist mit dem optischen Monitorsignalausgang verbunden und konfiguriert, das optische Monitorsignal in ein elektrisches Datenausgangssignal umzuwandeln. Hierdurch können Daten, welche durch das optische Eingangssignal übermittelt werden, durch den Mach-Zehnder-Modulator im Receiver-Modus an der Monitor-Photodiode empfangen und elektronisch weiterverarbeitet werden.

Vorzugsweise ist die Regelschaltung ferner konfiguriert, die mindestens eine Modulationseinrichtung zumindest teilweise, insbesondere basierend auf dem Vergleich der optischen Teilsignale durch die Signal-Vergleichseinrichtung, anzusteuern. Hierdurch kann die Arbeitspunktregelung zusätzlich oder alternativ über die mindestens eine Modulationseinrichtung ermöglicht werden. Somit kann hierbei auf die Verwendung der Regel-Modulationseinrichtungen verzichtet werden, und die Arbeitspunktregelung vollständig über die mindestens eine Modulationseinrichtung erfolgen.

Vorzugsweise umfasst die Regelschaltung ferner eine Diagnoseeinrichtung. Die Diagnoseeinrichtung ist hierbei ausgelegt, Fehler in den mindestens zwei Leistungsteilern und/oder der optischen Referenzsignal-Kombiniereinrichtung und/oder dem Photodetektor und/oder der mindestens einen Regel-Modulationseinrichtung zu registrieren. Hierbei kann beispielsweise der Arbeitspunkt über einen vorbestimmten Zeitraum, beispielsweise mindestens 5 Sekunden und/oder maximal 1 Minute, ermittelt werden, wobei die Diagnoseeinrichtung unerwartet starke Abweichungen der Arbeitspunkte ermittelt. Die Diagnoseeinrichtung kann eine solche starke Abweichung als potentiellen Fehler markieren und eine Funktionsfähigkeit der mindestens zwei Leistungsteiler und/oder der optischen Referenzsignal-Kombiniereinrichtung und/oder dem Photodetektor und/oder der mindestens einen Regel-Modulationseinrichtung überprüfen. Somit kann beispielsweise die mindestens eine Regel-Modulationseinrichtung durch ein kontinuierlich oder periodisch oder aperiodisch variierendes Diagnosesignal angesteuert werden, wodurch eine resultierende Arbeitspunktveränderung auf potentielle fehlerhafte Bauteile schließen lässt. Sollte beispielsweise keine Veränderung des Arbeitspunktes trotz des variierenden Diagnosesignals festgestellt werden, kann dies von der Diagnoseeinrichtung als Fehler der mindestens einen Regel-Modulationseinrichtung interpretiert werden, wobei durch separates Ansteuern jeder Regel-Modulationseinrichtung der mindestens einen Regel-Modulationseinrichtung eine Ermittlung einer fehlerhaften Regel-Modulationseinrichtung ermöglicht. Durch das Ansteuern der mindestens einen Regel-Modulationseinrichtung durch das kontinuierlich oder periodisch oder aperiodisch variierende Diagnosesignal kann auch ein Fehler in den mindestens zwei Leistungsteilern und/oder der optischen Referenzsignal-Kombiniereinrichtung und/oder dem Photodetektor ermittelt werden. In dem Fall einer Registrierung eines Fehlers durch die Diagnoseeinrichtung, kann die Diagnoseeinrichtung eine Fehlermeldung beispielsweise an einen Benutzer und/oder ein externes Computersystem übermitteln, wobei die Fehlermeldung zusätzlich Informationen über die fehlerhaften Bauteile enthalten kann.

Ein weiterer Aspekt betrifft ein Verfahren zur Arbeitspunktregelung eines Mach-Zehnder-Modulators, umfassend ein Bereitstellen eines Mach-Zehnder-Modulators mit einer Regelvorrichtung, wobei der Mach-Zehnder-Modulator mit der Regelvorrichtung gemäß einer der oben beschriebenen Ausführungsformen ausgebildet ist, und ein Ansteuern der mindestens einen Regel-Modulationseinrichtung und/oder der mindestens einen Modulationseinrichtung basierend auf dem Vergleich der optischen Teilsignale durch die Signal-Vergleichseinrichtung.

Die Erfindung wird ferner in nachfolgenden Figuren anhand von illustrativen Ausführungsformen beschrieben. Es zeigen:
- **Figur 1:**: eine schematische Ansicht eines Mach-Zehnder-Modulators gemäß dem Stand der Technik;
- **Figur 2:**: eine graphische Darstellung eines Quadraturpunktes eines Mach-Zehnder-Modulators;
- **Figur 3:**: eine schematische Darstellung eines Mach-Zehnder-Modulators mit einer Regelvorrichtung;
- **Figur 4**: eine schematische Darstellung eines Mach-Zehnder-Modulators gemäß Figur 3 mit einer zweiten Regel-Modulationseinrichtung;
- **Figur 5**: eine schematische Darstellung eines Mach-Zehnder-Modulators gemäß Figur 3 mit einer erweiterten Regelschaltung;
- **Figur 6**: eine schematische Darstellung eines Mach-Zehnder-Modulators gemäß Figur 3 mit einer Monitor-Photodiode;
- **Figur 7**: eine schematische Darstellung eines Mach-Zehnder-Modulators gemäß Figur 4 mit einer Monitor-Photodiode;
- **Figur 8**:: eine schematische Darstellung eines Mach-Zehnder-Modulators gemäß Figur 5 mit einer Monitor-Photodiode.

**Figur 1** zeigt einen Mach-Zehnder-Modulator **20,** welcher gemäß dem Stand der Technik ausgebildet ist. Für eine eingehende Beschreibung von Figur 1 wird auf die Einleitung verwiesen.

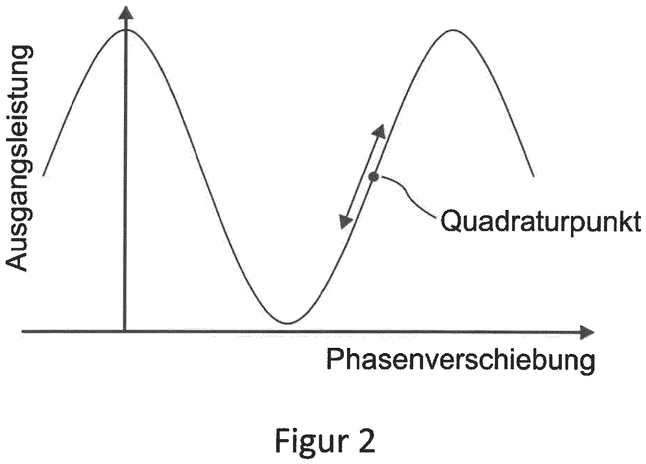

**Figur 2** zeigt eine graphische Darstellung eines Quadraturpunktes eines Mach-Zehnder-Modulators. Der übliche Arbeitspunkt eines Mach-Zehnder-Modulators ist ein oder der Quadraturpunkt, bei dem die Ausgangsintensität gerade in der Mitte zwischen minimaler und maximaler Ausgangsintensität liegt. Üblicherweise hat die entsprechende Messkurve dort ihre größte Steigung und beste Linearität. Die schematisch dargestellte Kennlinie eines Mach-Zehnder-Modulators in Figur 2 ist als optische Ausgangsleistung in einem optischen Signalausgang des Mach-Zehnder-Modulators über der Phasenverschiebung des Lichts in den beiden optischen Führungsarmen dargestellt. Ohne Phasenverschiebung ergibt sich konstruktive Interferenz in einem Signalkombinierer für den optischen Signalausgang und die Ausgangsleistung ist maximal. Durch zunehmende Phasenverschiebung sinkt die Ausgangsleistung zunächst ab und durchläuft bei einer Phasenverschiebung von 180° bzw. π/2 ein Minimum. Bei weiterer Phasenverschiebung steigt die Ausgangsleistung wieder an. Die Punkte mit maximaler bzw. minimaler Steigung der Kennlinie sind die Quadraturpunkte und die meistens gewünschten Arbeitspunkte des Mach-Zehnder-Modulators. Während in Figur 2 nur ein Quadraturpunkt markiert ist, ist anzudeuten, dass mehrere Quadraturpunkte existieren, wobei eine Menge der Quadraturpunkte alle Punkte der Kennlinie umfasst, an denen die Steigung maximal und/oder minimal ist. Daher ist es wünschenswert, den Mach-Zehnder-Modulator mit einer Arbeitspunktregelung in einem solchen Arbeitspunkt zu halten.

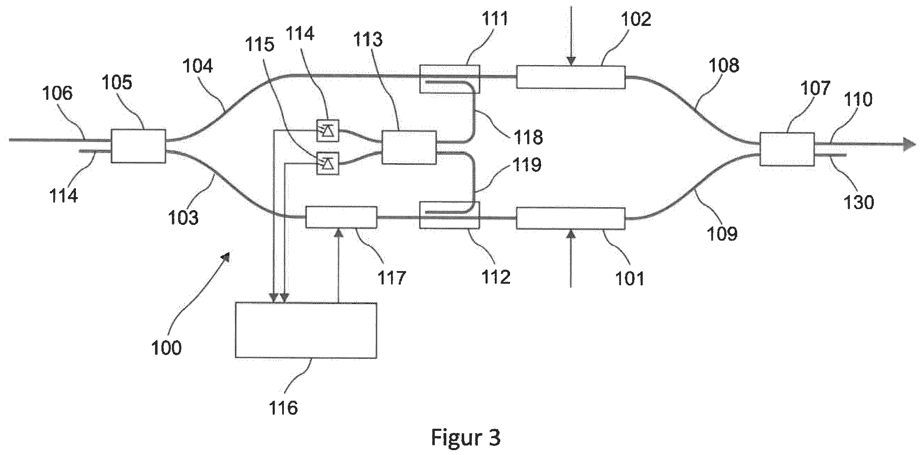

**Figur 3** zeigt einen Mach-Zehnder-Modulator **100** mit einer Regelvorrichtung zur Arbeitspunktregelung. Der Mach-Zehnder-Modulator **100** weist insbesondere eine optische Teilereinrichtung **105** auf, welche ausgelegt ist, ein optisches Eingangssignal in optische Teilsignale auf zwei optische Führungsarme **103, 104** zu verteilen. Hierzu weist die optische Teilereinrichtung **105** zwei optische Signaleingänge **106, 114** auf, über die das optische Eingangssignal an die optische Teilereinrichtung **105** übermittelt werden kann. Die optische Teilereinrichtung **105** ist beispielsweise als 2x2 Multimode-Interferometer ausgebildet.

Die optische Teilereinrichtung **105** verteilt das optische Eingangssignal in zwei optische Teilsignale, welche jeweils an den ersten Führungsarm **103** und den zweiten Führungsarm **104** geleitet werden, wobei die optische Teilereinrichtung **105** das optische Eingangssignal bevorzugt in identische optische Teilsignale teilt. Die optischen Teilsignale durchlaufen jeweils einen Leistungsteiler **111, 112,** wobei jeweils ein Leistungsteiler in dem ersten optischen Führungsarm **103** und dem zweiten optischen Führungsarm **104** ausgebildet ist. Der erste optische Führungsarm **103** und der zweite optische Führungsarm **104** sind hierbei konfiguriert, so dass die zurückgelegte Strecke jedes optischen Teilsignals zwischen der optischen Teilereinrichtung **105** und des jeweiligen Leistungsteilers **111, 112** im Wesentlichen identisch sind. Insbesondere sind die beiden Leistungsteiler **111, 112** derart angeordnet, so dass jedes der optischen Teilsignale zuerst den jeweiligen Leistungsteiler **111, 112** durchläuft, bevor das jeweilige optische Teilsignal auf eine der beiden Modulationseinrichtungen **101, 102** trifft.

Jeder der beiden Leistungsteiler **111, 112** zweigt ein Referenzsignal von dem jeweiligen optischen Teilsignal ab, wobei das jeweilige Referenzsignal die gleichen optischen Eigenschaften, aber eine geringere Intensität bzw. Amplitude wie das optische Teilsignal aufweist, von dem es abgeleitet wurde. Das erste Referenzsignal wird von dem ersten Leistungsteiler **112** abgezweigt und über einen ersten Referenzsignalleiter **119** an eine Referenzsignal-Kombiniereinrichtung **113** übermittelt. Das zweite Referenzsignal wird von dem zweiten Leistungsteiler **111** abgezweigt und über einen zweiten Referenzsignalleiter **118** an die Referenzsignal-Kombiniereinrichtung **113** übermittelt. Hierbei sind der erste Referenzsignalleiter **119** und der zweite Referenzsignalleiter **118** konfiguriert, so dass eine zurückgelegte Strecke des ersten Referenzsignals in dem ersten Referenzsignalleiter **119** im Wesentlichen identisch mit einer zurückgelegten Strecke des zweiten Referenzsignals in dem zweiten Referenzsignalleiter **118** ist.

Die optische Referenzsignal-Kombiniereinrichtung **113** ist ausgelegt, die beiden Referenzsignale zu kombinieren. Hierzu weist die optische Referenzsignal-Kombiniereinrichtung **113** insbesondere zwei optische Signaleingänge auf, wobei insbesondere jeweils ein Signaleingang der optischen Referenzsignal-Kombiniereinrichtung **113** mit jeweils einem Leistungsteiler **111, 112** über einen der beiden Referenzsignalleiter **118, 119** verbunden ist. Ferner ist die optische Referenzsignal-Kombiniereinrichtung **113** ausgelegt, die Referenzsignale an den Signaleingängen der optischen Referenzsignal-Kombiniereinrichtung **113** zu empfangen und zu kombinieren. Hierzu kann die Referenzsignal-Kombiniereinrichtung **113** insbesondere als 2x2 Multimode-Interferometer ausgebildet sein. Insbesondere umfasst die optische Referenzsignal-Kombiniereinrichtung **113** mindestens zwei Signalausgänge, wobei die Referenzsignale durch die optische Referenzsignal-Kombiniereinrichtung **113** zu zwei Messsignalen kombiniert bzw. umgewandelt werden. Die optische Referenzsignal-Kombiniereinrichtung **113** kann insbesondere ausgelegt sein, so dass, wenn sich der Mach-Zehnder-Modulator **100** im richtigen Arbeitspunkt befindet, die mindestens zwei Messsignale im Wesentlichen identisch sind. Alternativ kann die optische Referenzsignal-Kombiniereinrichtung ausgelegt sein, so dass, wenn sich der Mach-Zehnder-Modulator **100** im richtigen Arbeitspunkt befindet, mindestens ein Messsignal maximal ist und mindestens ein Messsignal minimal ist bzw. verschwindet. Jeweils ein Messsignal der zwei Messsignale wird an jeweils einem der beiden Signalausgänge der Referenzsignal-Kombiniereinrichtung **113** erzeugt.

Der Mach-Zehnder-Modulator **100** weist ferner eine Photodetektoreinrichtung auf, welche ausgelegt ist, die mindestens zwei Messsignale zu empfangen und in mindestens ein elektrisches Messdatensignal umzuwandeln. Hierbei ist die Photodetektoreinrichtung beispielsweise als eine erste Photodiode **115** und eine zweite Photodiode **114** ausgebildet. Die erste Photodiode **115** weist ferner einen ersten Messdatenausgang auf, an dem ein erstes elektrisches Messdatensignal von der ersten Photodiode **115** erzeugt und weitergeleitet wird. Die zweite Photodiode **114** weist ferner einen zweiten Messdatenausgang auf, an dem ein zweites elektrisches Messdatensignal von der zweiten Photodiode **114** erzeugt und weitergeleitet wird. Insbesondere ist jeder der beiden Messdatenausgänge mit einer Regelschaltung **116** verbunden und übermittelt der Regelschaltung **116** das mindestens eine elektrische Messdatensignal.

Die beiden Leistungsteiler **111, 112,** die optische Referenzsignal-Kombiniereinrichtung **113** und die beiden Photodioden **114, 115** sind hierbei Bestandteile einer Signal-Vergleichseinrichtung der Regelvorrichtung. Die Signal-Vergleichseinrichtung ist somit insbesondere konfiguriert, jedes der optischen Teilsignale bzw. physikalische Eigenschaften jedes der optischen Teilsignale zu messen und/oder die optischen Teilsignale bzw. die physikalischen Eigenschaften der optischen Teilsignale miteinander zu vergleichen. Somit können Abweichungen zwischen den optischen Teilsignalen registriert bzw. gemessen werden.

Die Regelschaltung **116** ist konfiguriert, den Arbeitspunkt des Mach-Zehnder-Modulators **100** mindestens durch Ansteuerung einer Regel-Modulationseinrichtung **117** basierend auf dem Vergleich der optischen Teilsignale zu regeln. Hierbei kann die Regelschaltung **116** insbesondere ausgebildet sein, die beiden Messdatensignale von der ersten Photodiode **115** und der zweiten Photodiode **114** zu empfangen und zu vergleichen. Insbesondere kann die Regelschaltung **116** den Vergleich der optischen Teilsignale evaluieren und die eine Regel-Modulationseinrichtung **117** derart ansteuern, so dass einer potentiellen Beeinträchtigung des Arbeitspunktes des Mach-Zehnder-Modulators **100** durch Umwelteinflüsse entgegengewirkt wird bzw. eine solche potentielle Beeinträchtigung im Wesentlichen ausgeglichen wird.

Die Regelvorrichtung umfasst ferner die Regel-Modulationseinrichtung **117,** wobei die Regel-Modulationseinrichtung **117** als Phasenmodulator ausgebildet ist. Die Regel-Modulationseinrichtung **117** ist ausgebildet, eine Lichtgeschwindigkeit eines die Regel-Modulationseinrichtung **117** durchlaufenden optischen Teilsignals zu reduzieren oder zu erhöhen, wodurch eine Phase des durchlaufenden optischen Teilsignals nach Austritt aus der Regel-Modulationseinrichtung **117** beeinflusst wird. Hierfür kann die Regel-Modulationseinrichtung **117** beispielsweise aufgrund eines angelegten elektrischen bzw. magnetischen bzw. elektro-magnetischen Signals die Lichtgeschwindigkeit des durchlaufenden optischen Signals regeln. Ferner können thermische, insbesondere thermooptische, oder mechanische Phasenmodulatoren verwendet werden.

Die beiden Leistungsteiler **111, 112** bzw. die Signal-Vergleichseinrichtung und die Regel-Modulationseinrichtung **117** sind zwischen der optischen Teilereinrichtung **105** und zwei Modulationseinrichtungen **101, 102** angeordnet, wobei jeweils eine Modulationseinrichtung **101, 102** in jedem optischen Führungsarm **103, 104** angeordnet ist. Hierbei ist durchläuft jedes optische Teilsignal jeweils einen Leistungsteiler **111, 112** der Signal-Vergleichseinrichtung, nachdem die optischen Teilsignale durch die optische Teilereinrichtung **105** auf die mindestens zwei optischen Führungsarme **103, 104** verteilt wurden, und bevor das erste optische Teilsignal die erste Modulationseinrichtung **101** und bevor das zweite optische Teilsignal die zweite Modulationseinrichtung **102** durchlaufen hat bzw. eine Phase des ersten optischen Teilsignals durch die erste Modulationseinrichtung **101** moduliert wurde und eine Phase des zweiten optischen Teilsignals durch die zweite Modulationseinrichtung **102** moduliert wurde. Ferner ist die Regel-Modulationseinrichtung **117** derart angeordnet, dass die Regel-Modulationseinrichtung **117** das erste optische Teilsignal in dem ersten optischen Führungsarm **103** modulieren kann, nachdem die optischen Teilsignale durch die optische Teilereinrichtung **105** auf die zwei optischen Führungsarme **103, 104** verteilt wurden, und bevor die optischen Teilsignale durch die Signal-Vergleichseinrichtung verglichen werden bzw. die optischen Teilsignale die beiden Leistungsteiler **111, 112** durchlaufen.

Der Mach-Zehnder-Modulator umfasst die zwei Modulationseinrichtungen **101, 102,** welche als optische Phasenmodulatoren zur Phasenmodulation des ersten und zweiten optischen Teilsignals in jeweils einem der zwei optischen Führungsarme **103, 104** ausgelegt sind.

Hierbei weist der erste optische Führungsarm **103** die erste Modulationseinrichtung **101** und der zweite optische Führungsarm **104** die zweite Modulationseinrichtung **102** auf. Die erste und zweite Modulationseinrichtung **101, 102 sind** ausgebildet, eine Lichtgeschwindigkeit des die jeweilige Modulationseinrichtung **101, 102** durchlaufenden optischen Teilsignals zu reduzieren oder zu erhöhen, wodurch eine Phase des durchlaufenden optischen Teilsignals nach Austritt aus der jeweiligen Modulationseinrichtung **101, 102** beeinflusst wird. Hierfür kann die jeweilige Modulationseinrichtung **101, 102** beispielsweise aufgrund eines angelegten elektrischen bzw. magnetischen bzw. elektro-magnetischen Signals die Lichtgeschwindigkeit des durchlaufenden optischen Teilsignals regeln. Ferner können thermische oder mechanische Phasenmodulatoren verwendet werden. Bevorzugt weisen der erste optische Führungsarm **103** und der zweite optische Führungsarm **104** jeweils eine im Wesentlichen identische Modulationseinrichtung **101, 102** auf, wodurch eine effiziente Phasenmodulation ermöglicht wird. Die erste Modulationseinrichtung **101** und die zweite Modulationseinrichtung **102** können hierbei durch ein externes elektrisches Steuersignal kontrolliert werden, welches in Figur 3 exemplarisch durch Pfeile dargestellt ist.

Der Mach-Zehnder-Modulator **100** weist ferner eine optische Kombiniereinrichtung **107** auf, welche ausgelegt ist, die beiden optischen Teilsignale, welche über den ersten optischen Führungsarm **103** und den zweiten optische Führungsarm **104** an die optische Kombiniereinrichtung **107** übermittelt werden, zu kombinieren. Hierzu weist die optische Kombiniereinrichtung **107** zwei optische Signaleingänge auf. Insbesondere ist jeweils ein optischer Signaleingang **108, 109** der optischen Kombiniereinrichtung **107** mit jeweils einem der beiden optischen Führungsarme **103, 104** verbunden. Ferner ist die optische Kombiniereinrichtung **107** ausgelegt, die optischen Teilsignale, welche über die beiden Führungsarme **103, 104** übermittelt werden, an den Signaleingängen der optischen Kombiniereinrichtung **107** zu empfangen und zu kombinieren. Somit wird hierdurch das optische Eingangssignal, welches durch die optische Teilereinrichtung **105** auf die mindestens zwei optischen Führungsarme verteilt wird, durch die optische Kombiniereinrichtung **107** zu einem optischen Ausgangssignal kombiniert. Insbesondere entsteht das optische Ausgangssignal durch eine zumindest teilweise Überlagerung der beiden optischen Teilsignale. Weist das Licht aus beiden optischen Führungsarmen **103, 104** die gleiche Phasenlage auf, entsteht konstruktive Interferenz, und das optische Ausgangssignal ist hoch. Weist das Licht aus beiden optischen Führungsarmen **103, 104** einen Phasenunterschied von 180° auf, entsteht destruktive Interferenz, und das optische Ausgangssignal ist niedrig, wobei das optische Ausgangssignal bevorzugt vollständig verschwindet. Die optische Kombiniereinrichtung weist ferner zwei optische Signalausgänge **110, 130** auf, an welche das optische Ausgangssignal geleitet werden kann.

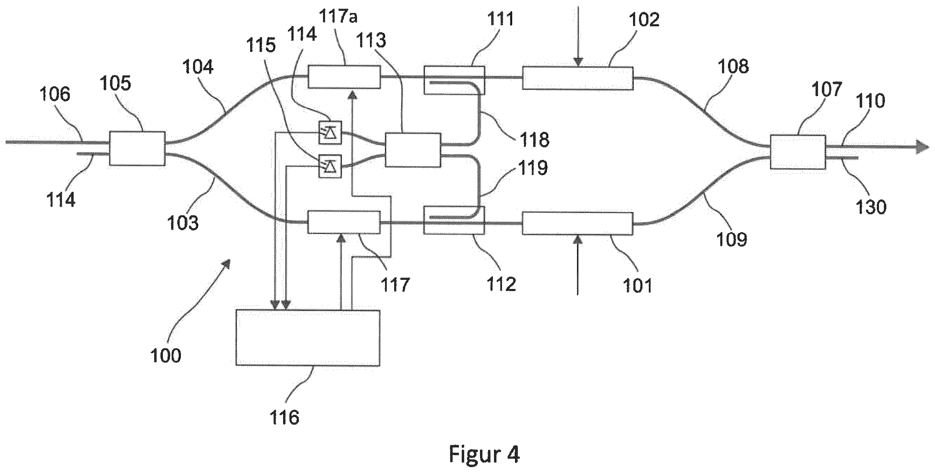

**Figur 4** zeigt einen Mach-Zehnder-Modulator **100** mit einer Regelvorrichtung zur Arbeitspunktregelung gemäß Figur 3, wobei der Mach-Zehnder-Modulator **100** um eine zweite Regel-Modulationseinrichtung **117a** ergänzt ist. Die zweite Regel-Modulationseinrichtung **117a** kann in dem zweiten optischen Führungsarm **104** an einer Position identisch zu der Position der ersten Regel-Modulationseinrichtung **117** in dem ersten optischen Führungsarm **103** angeordnet sein. Ferner kann die erste Regel-Modulationseinrichtung **117** identisch zu der zweiten Regel-Modulationseinrichtung **117a** ausgebildet sein. Durch die Ausbildung einer Regel-Modulationseinrichtung **117, 117a** in jedem der beiden optischen Führungsarme **103, 104** wird eine effiziente Arbeitspunktregelung ermöglicht.

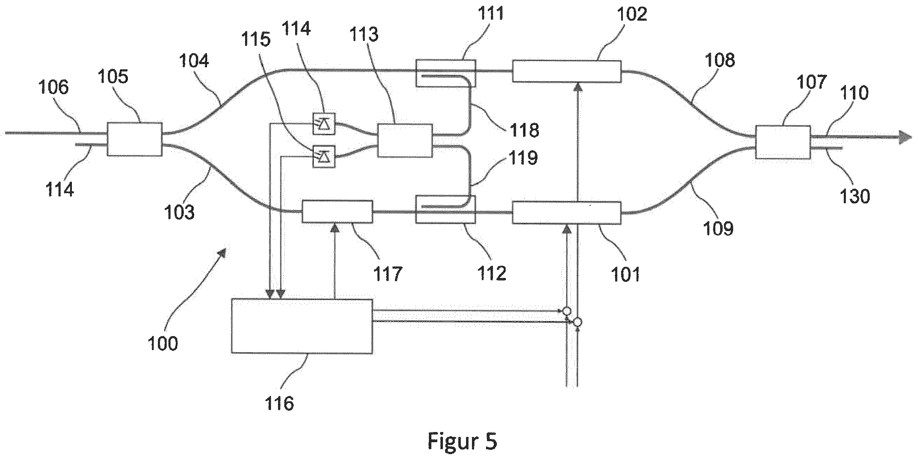

**Figur 5** zeigt einen Mach-Zehnder-Modulator **100** mit einer Regelvorrichtung zur Arbeitspunktregelung gemäß Figur 3, wobei die Regelschaltung **116** des Mach-Zehnder-Modulators **100** zusätzlich mit der ersten Modulationseinrichtung **101** und der zweiten Modulationseinrichtung **102** verbunden ist. Insbesondere ist die Regelschaltung **116** ferner konfiguriert, die erste Modulationseinrichtung **101** zumindest teilweise, insbesondere basierend auf dem Vergleich der optischen Teilsignale durch die Signal-Vergleichseinrichtung, anzusteuern. Die Regelschaltung **116** ist ferner konfiguriert, die zweite Modulationseinrichtung **102** zumindest teilweise, insbesondere basierend auf dem Vergleich der optischen Teilsignale durch die Signal-Vergleichseinrichtung, anzusteuern. Hierdurch wird die Arbeitspunktregelung zusätzlich oder alternativ über die beiden Modulationseinrichtungen **101, 102** ermöglicht. Somit kann hierbei auf die Ansteuerung der Regel-Modulationseinrichtung **117** verzichtet werden, und die Arbeitspunktregelung vollständig über die beiden Modulationseinrichtungen **101, 102** erfolgen. Insbesondere kann hierdurch der Arbeitspunkt des Mach-Zehnder-Modulators **100** weiterhin geregelt werden, selbst wenn die Regel-Modulationseinrichtung **117** fehlerhaft oder kaputt ist.

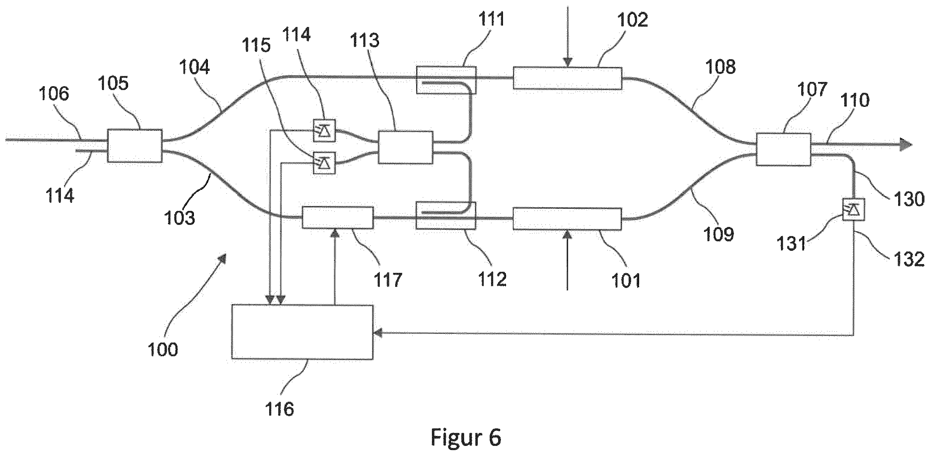

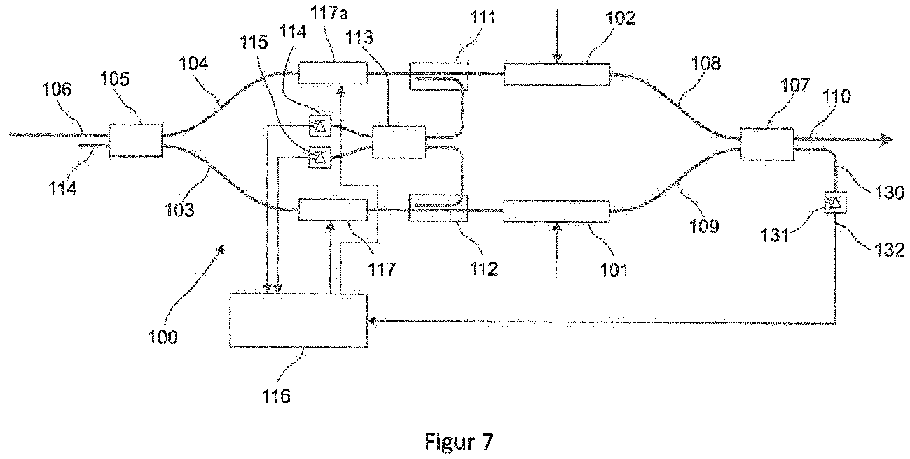

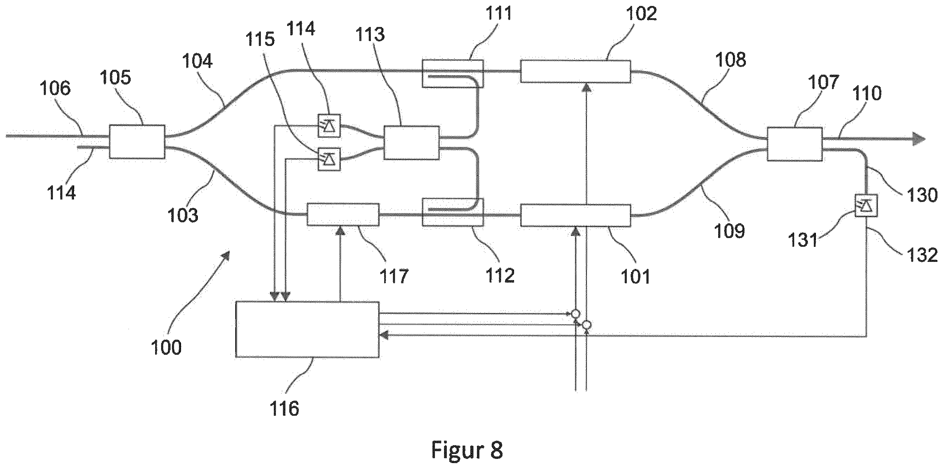

**Figur 6****,** **Figur 7** und **Figur 8** zeigen jeweils einen Mach-Zehnder-Modulator **100** mit einer Regelvorrichtung zur Arbeitspunktregelung gemäß jeweils Figur 3, Figur 4 und Figur 5, wobei der Mach-Zehnder-Modulator **100** jeweils um eine Monitor-Photodiode **131** erweitert ist. Hierbei umfasst die optische Kombiniereinrichtung **107** einen optischen Monitorsignalausgang **130,** welcher mit der Monitor-Photodiode **131** verbunden ist, wobei die Monitor-Photodiode **131** ausgelegt ist, ein optisches Monitorsignal an dem optischen Monitorsignalausgang **130** zu empfangen und der Regelschaltung **116** ein hierauf basierendes elektrisches Monitordatensignal zuzuführen. Hierzu weist die Monitor-Photodiode **131** mindestens einen Monitordatensignalausgang **132** auf, über welchen das elektrische Monitordatensignal übermittelt wird. Die Regelschaltung **116** ist insbesondere konfiguriert, einen Arbeitspunkt des Mach-Zehnder-Modulators **100** durch Ansteuerung der mindestens einen Regel-Modulationseinrichtung **117, 117a** basierend auf dem Vergleich der optischen Teilsignale durch die Signal-Vergleichseinrichtung und dem elektrischen Monitordatensignal der Monitor-Photodiode **131** zu regeln. Somit wird eine Arbeitspunktregelung basierend auf den optischen Teilsignalen in den zwei optischen Führungsarmen **103, 104** und basierend auf dem optischen Monitorsignal nach der optischen Kombiniereinrichtung **107** ermöglicht, d.h. basierend auf einem Feedforward und einem Feedback-Loop. Der Begriff "im Wesentlichen" ist im Rahmen dieser Beschreibung als umfassend geringer herstellungs- und umweltbedingter Abweichungen zu verstehen.

### Bezugszeichenliste

- **1**: Phasenmodulator des unteren Armes (Stand der Technik)
- **2**: Phasenmodulator des oberen Armes (Stand der Technik)
- **3**: unterer Arm (Stand der Technik)
- **4**: oberer Arm (Stand der Technik)
- **6**: Eingangswellenleiter (Stand der Technik)
- **8**: zweiter oberer Arm (Stand der Technik)
- **9**: zweiter unterer Arm (Stand der Technik)
- **10**: Ausgangswellenleiter (Stand der Technik)
- **20**: Mach-Zehnder-Modulator (Stand der Technik)
- **100**: Mach-Zehnder-Modulator
- **101**: erste Modulationseinrichtung
- **102**: zweite Modulationseinrichtung
- **103**: erster optischer Führungsarm
- **104**: zweiter optischer Führungsarm
- **105**: optische Teilereinrichtung
- **106**: erster optischer Signaleingang der optischen Teilereinrichtung
- **107**: optische Kombiniereinrichtung
- **108**: zweiter optischer Signaleingang der optischen Kombiniereinrichtung
- **109**: erster optischer Signaleingang der optischen Kombiniereinrichtung
- **110**: erster optischer Signalausgang bzw. Transmissionssignalausgang der optischen Kombiniereinrichtung
- **111**: zweiter Leistungsteiler
- **112**: erster Leistungsteiler
- **113**: optische Referenzsignal-Kombiniereinrichtung
- **114**: zweite Photodiode
- **115**: erste Photodiode
- **116**: Regelschaltung
- **117**: erste Regel-Modulationseinrichtung
- **117a**: zweite Regel-Modulationseinrichtung
- **118**: zweiter Referenzsignalleiter
- **119**: erster Referenzsignalleiter
- **130**: Monitorsignalausgang
- **131**: Monitor-Photodiode
- **132**: Monitordatensignalausgang

## Patentansprüche

1. Mach-Zehnder-Modulator (100) mit Regelvorrichtung zur Arbeitspunktregelung, umfassend:
- einen Mach-Zehnder-Modulator (100), umfassend:
-- eine optische Teilereinrichtung (105), welche ausgelegt ist, ein optisches Eingangssignal in optische Teilsignale auf mindestens zwei optische Führungsarme (103, 104) zu verteilen,
-- mindestens eine Modulationseinrichtung (101, 102), welche als optischer Phasenmodulator zur Phasenmodulation des optischen Eingangssignals in mindestens einem der mindestens zwei optischen Führungsarme (103, 104) ausgelegt ist, und
-- eine optische Kombiniereinrichtung (107), wobei die optische Kombiniereinrichtung (107) ausgelegt ist, die optischen Teilsignale der mindestens zwei optischen Führungsarme (103, 104) zu kombinieren; und
- eine Regelvorrichtung, umfassend:
-- eine Signal-Vergleichseinrichtung, welche ausgelegt ist, die optischen Teilsignale der mindestens zwei optischen Führungsarme (103, 104) zu vergleichen, wobei die Signal-Vergleichseinrichtung zwischen der optischen Teilereinrichtung (105) und der mindestens einen Modulationseinrichtung (101, 102) angeordnet ist,
-- mindestens eine Regel-Modulationseinrichtung (117, 117a), welche in mindestens einem der mindestens zwei optischen Führungsarme (103, 104) angeordnet ist, und
-- eine Regelschaltung (116), wobei die Regelschaltung (116) konfiguriert ist, einen Arbeitspunkt des Mach-Zehnder-Modulators (100) mindestens durch Ansteuerung der mindestens einen Regel-Modulationseinrichtung (117, 117a) basierend auf dem Vergleich der optischen Teilsignale durch die Signal-Vergleichseinrichtung zu regeln.

2. Mach-Zehnder-Modulator (100) mit Regelvorrichtung nach Anspruch 1, wobei die mindestens eine Regel-Modulationseinrichtung (117, 117a) zwischen der optischen Teilereinrichtung (105) und der mindestens einen Modulationseinrichtung (101, 102) angeordnet ist.

3. Mach-Zehnder-Modulator (100) mit Regelvorrichtung nach Anspruch 1 oder 2, wobei die Signal-Vergleichseinrichtung umfasst:
- mindestens zwei Leistungsteiler (111, 112), wobei in jedem der mindestens zwei optischen Führungsarme (103, 104) ein Leistungsteiler (111, 112) der mindestens zwei Leistungsteiler (111, 112) angeordnet ist, wobei jeder Leistungsteiler (111, 112) der mindestens zwei Leistungsteiler (111, 112) ausgelegt ist, jeweils ein Referenzsignal von dem jeweiligen optischen Teilsignal abzuleiten;
- eine optische Referenzsignal-Kombiniereinrichtung (113), welche mit den mindestens zwei Leistungsteilern (111, 112) verbunden ist und ausgelegt ist, die mindestens zwei Referenzsignale in mindestens zwei Messsignale umzuwandeln; und
- eine Photodetektoreinrichtung, welche ausgelegt ist, die mindestens zwei Messsignale zu empfangen.

4. Mach-Zehnder-Modulator (100) mit Regelvorrichtung nach Anspruch 3, wobei mindestens eine Regel-Modulationseinrichtung (117, 117a) der mindestens einen Regel-Modulationseinrichtung (117, 117a) in einem der mindestens zwei optischen Führungsarme (103, 104) zwischen einem der mindestens zwei Leistungsteiler (111, 112) und der optischen Teilereinrichtung (105) angeordnet ist.

5. Mach-Zehnder-Modulator (100) mit Regelvorrichtung nach einem der Ansprüche 3 bis 4, wobei jeder der mindestens zwei Leistungsteiler (111, 112) ausgelegt ist, maximal 20%, bevorzugt maximal 5%, weiter bevorzugt maximal 2%, am meisten bevorzugt maximal 1% einer Leistung des jeweiligen optischen Teilsignals abzuleiten.

6. Mach-Zehnder-Modulator (100) mit Regelvorrichtung nach einem der Ansprüche 3 bis 5, wobei die mindestens zwei Leistungsteiler (111, 112) im Wesentlichen identisch ausgebildet sind; und/oder
wobei jeder der mindestens zwei Leistungsteiler (111, 112) als Y-Teiler und/oder als Richtkoppler und/oder als Multimode-Interferometer ausgebildet ist.

7. Mach-Zehnder-Modulator (100) mit Regelvorrichtung nach einem der Ansprüche 3 bis 6, wobei die optische Referenzsignal-Kombiniereinrichtung (113) und die optische Kombiniereinrichtung (107) im Wesentlichen identisch ausgebildet sind; und/oder
wobei die optische Teilereinrichtung (105) und/oder die optische Kombiniereinrichtung (107) und/oder die optische Referenzsignal-Kombiniereinrichtung (113) als Multimode-Interferometer ausgebildet ist.

8. Mach-Zehnder-Modulator (100) mit Regelvorrichtung nach einem der Ansprüche 3 bis 7, wobei die Photodetektoreinrichtung mindestens zwei Photodioden (114, 115) aufweist, wobei jede der mindestens zwei Photodioden (114, 115) ausgelegt ist, jeweils eines der mindestens zwei Messsignale zu empfangen,
wobei jede der mindestens zwei Photodioden (114, 115) einen Messdatenausgang aufweist, welcher mit der Regelschaltung (116) verbunden ist.

9. Mach-Zehnder-Modulator (100) mit Regelvorrichtung nach einem der Ansprüche 3 bis 7, wobei die Photodetektoreinrichtung als symmetrischer bzw. differentieller Photodetektor ausgebildet ist,
wobei der symmetrische bzw. differentielle Photodetektor mindestens einen Messdatenausgang aufweist, welcher mit der Regelschaltung (116) verbunden ist.

10. Mach-Zehnder-Modulator (100) mit Regelvorrichtung nach einem der Ansprüche 1 bis 9, wobei die mindestens eine Regel-Modulationseinrichtung (117, 117a) als thermooptischer Phasenmodulator ausgebildet ist.

11. Mach-Zehnder-Modulator (100) mit Regelvorrichtung nach einem der Ansprüche 1 bis 10, wobei die mindestens eine Regel-Modulationseinrichtung (117, 117a) mindestens zwei Regel-Modulationseinrichtungen (117, 117a) umfasst, wobei jeder der mindestens zwei optischen Führungsarme (103, 104) mindestens eine der mindestens zwei Regel-Modulationseinrichtungen (117, 117a) aufweist.

12. Mach-Zehnder-Modulator (100) mit Regelvorrichtung nach einem der Ansprüche 1 bis 11, wobei die optische Kombiniereinrichtung (107) einen optischen Monitorsignalausgang (130) umfasst, welcher mit einer Monitor-Photodiode (131) verbunden ist,
wobei die Monitor-Photodiode (131) ausgelegt ist, ein optisches Monitorsignal an dem optischen Monitorsignalausgang (130) zu empfangen und der Regelschaltung (116) ein hierauf basierendes elektrisches Monitordatensignal zuzuführen,
wobei die Regelschaltung (116) konfiguriert ist, einen Arbeitspunkt des Mach-Zehnder-Modulators (100) durch Ansteuerung der mindestens einen Regel-Modulationseinrichtung (117, 117a) basierend auf dem Vergleich der optischen Teilsignale durch die Signal-Vergleichseinrichtung und dem elektrischen Monitordatensignal der Monitor-Photodiode (131) zu regeln.

13. Mach-Zehnder-Modulator (100) mit Regelvorrichtung nach Anspruch 12, wobei die optische Kombiniereinrichtung (107) einen optischen Transmissionssignalausgang (110) umfasst,
wobei der Mach-Zehnder-Modulator (100) einen Transmitter-Modus aufweist, in dem ein optisches Transmissionssignal basierend auf dem optischen Eingangssignal an dem optischen Transmissionssignalausgang (110) erzeugt wird, und einen Receiver-Modus aufweist, in dem das optische Eingangssignal an die Monitor-Photodiode (131) gelenkt ist und in ein elektrisches Datensignal umgewandelt wird.

14. Mach-Zehnder-Modulator (100) mit Regelvorrichtung nach einem der Ansprüche 1 bis 13, wobei die Regelschaltung (116) ferner konfiguriert ist, die mindestens eine Modulationseinrichtung (101, 102) zumindest teilweise, insbesondere basierend auf dem Vergleich der optischen Teilsignale durch die Signal-Vergleichseinrichtung, anzusteuern.

15. Verfahren zur Arbeitspunktregelung eines Mach-Zehnder-Modulators (100), umfassend:
- Bereitstellen eines Mach-Zehnder-Modulators (100) mit einer Regelvorrichtung, umfassend:
-- eine optische Teilereinrichtung (105), welche ausgelegt ist, ein optisches Eingangssignal in optische Teilsignale auf mindestens zwei optische Führungsarme (103, 104) zu verteilen,
-- mindestens eine Modulationseinrichtung (101, 102), welche als optischer Phasenmodulator zur Phasenmodulation des optischen Eingangssignals in mindestens einem der mindestens zwei optischen Führungsarme (103, 104) ausgelegt ist,
-- eine optische Kombiniereinrichtung (107), wobei die optische Kombiniereinrichtung (107) ausgelegt ist, die optischen Teilsignale der mindestens zwei optischen Führungsarme (103, 104) zu kombinieren,
-- eine Signal-Vergleichseinrichtung, welche ausgelegt ist, die optischen Teilsignale der mindestens zwei optischen Führungsarme (103, 104) zu vergleichen, wobei die Signal-Vergleichseinrichtung zwischen der optischen Teilereinrichtung (105) und der mindestens einen Modulationseinrichtung (101, 102) angeordnet ist,
-- mindestens eine Regel-Modulationseinrichtung (117, 117a), welche in mindestens einem der mindestens zwei optischen Führungsarme (103, 104) angeordnet ist, und
-- eine Regelschaltung (116), wobei die Regelschaltung (116) konfiguriert ist, einen Arbeitspunkt des Mach-Zehnder-Modulators (100) mindestens durch Ansteuerung der mindestens einen Regel-Modulationseinrichtung (117, 117a) basierend auf dem Vergleich der optischen Teilsignale durch die Signal-Vergleichseinrichtung zu regeln; und
- Ansteuern der mindestens einen Regel-Modulationseinrichtung (117, 117a) basierend auf dem Vergleich der optischen Teilsignale durch die Signal-Vergleichseinrichtung.

## Claims

1. A Mach-Zehnder modulator (100) with control device for operating point control, comprising:
- a Mach-Zehnder modulator (100) comprising:
-- an optical splitter device (105) configured to distribute an optical input signal in optical partial signals to at least two optical guide arms (103, 104),
-- at least one modulation device (101, 102) configured as an optical phase modulator for phase modulation of the optical input signal in at least one of the at least two optical guide arms (103, 104), and
-- an optical combining device (107), the optical combining device (107) being configured to combine the optical partial signals of the at least two optical guide arms (103, 104); and
- a control device comprising:
-- a signal comparing device configured to compare the optical partial signals of the at least two optical guide arms (103, 104), the signal comparing device being arranged between the optical splitter device (105) and the at least one modulation device (101, 102),
-- at least one control modulation device (117, 117a) arranged in at least one of the at least two optical guide arms (103, 104), and
-- a control circuit (116), the control circuit (116) being configured to control an operating point of the Mach-Zehnder modulator (100) at least by controlling the at least one control modulation device (117, 117a) based on the comparison of the partial optical signals by the signal comparing device.

2. The Mach-Zehnder modulator (100) with control device according to claim 1, wherein the at least one control modulation device (117, 117a) is arranged between the optical splitter device (105) and the at least one modulation device (101, 102).

3. The Mach-Zehnder modulator (100) with control device according to claim 1 or 2, wherein the signal comparing device comprises:
- at least two power splitter (111, 112), one power splitter (111, 112) of the at least two power splitters (111, 112) being arranged in each of the at least two optical guide arms (103, 104), each power splitter (111, 112) of the at least two power splitters (111, 112) being configured to respectively derive a reference signal from the respective partial optical signal;
- an optical reference signal combining device (113) connected to the at least two power splitters (111, 112) and configured to convert the at least two reference signals into at least two measurement signals; and
- a photodetector device configured to receive the at least two measurement signals.

4. The Mach-Zehnder modulator (100) with control device according to claim 3, wherein at least one control modulation device (117, 117a) of the at least one control modulation device (117, 117a) is arranged in one of the at least two optical guide arms (103, 104) between one of the at least two power splitters (111, 112) and the optical splitter device (105).

5. The Mach-Zehnder modulator (100) with control device according to one of claims 3 to 4, wherein each of the at least two power splitters (111, 112) is configured to derive maximally 20%, preferably maximally 5%, more preferably maximally 2%, most preferably maximally 1% of a power of the respective optical partial signal.

6. The Mach-Zehnder modulator (100) with control device according to one of claims 3 to 5, wherein the at least two power splitters (111, 112) are designed to be substantially identical; and/or
wherein each of the at least two power splitters (111, 112) is configured as a Y-splitter and/or as a directional coupler and/or as a multimode interferometer.

7. The Mach-Zehnder modulator (100) with control device according to one of claims 3 to 6, wherein the optical reference signal combining device (113) and the optical combining device (107) are designed to be substantially identical; and/or
wherein the optical splitter device (105) and/or the optical combining device (107) and/or the optical reference signal combining device (113) is configured as a multimode interferometer.

8. The Mach-Zehnder modulator (100) with control device according to one of claims 3 to 7, wherein the photodetector device has at least two photodiodes (114, 115), wherein each of the at least two photodiodes (114, 115) is configured to respectively receive one of the at least two measurement signals, wherein each of the at least two photodiodes (114, 115) has a measurement data output connected to the control circuit (116).

9. The Mach-Zehnder modulator (100) with control device according to one of claims 3 to 7, wherein the photodetector device is configured as a symmetrical or differential photodetector,
wherein the symmetrical or differential photodetector has at least one measurement data output connected to the control circuit (116).

10. The Mach-Zehnder modulator (100) with control device according to one of claims 1 to 9, wherein the at least one control modulation device (117, 117a) is configured as a thermo-optical phase modulator.

11. The Mach-Zehnder modulator (100) with control device according to one of claims 1 to 10, wherein the at least one control modulation device (117, 117a) comprises at least two control modulation devices (117, 117a), wherein each of the at least two optical guide arms (103, 104) has at least one of the at least two control modulation devices (117, 117a).

12. The Mach-Zehnder modulator (100) with control device according to one of claims 1 to 11, wherein the optical combining device (107) comprises an optical monitor signal output (130) connected to a monitor photodiode (131),
wherein the monitor photodiode (131) is configured to receive an optical monitor signal at the optical monitor signal output (130) and to supply an electrical monitor data signal based thereon to the control circuit (116),
wherein the control circuit (116) is configured to control an operating point of the Mach-Zehnder modulator (100) by controlling the at least one control modulation device (117, 117a) based on the comparison of the optical partial signals by the signal comparing device and the electrical monitor data signal of the monitor photodiode (131).

13. The Mach-Zehnder modulator (100) with control device according to claim 12, wherein the optical combining device (107) comprises an optical transmission signal output (110),
wherein the Mach-Zehnder modulator (100) has a transmitter mode in which an optical transmission signal is generated based on the optical input signal at the optical transmission signal output (110), and a receiver mode in which the optical input signal is routed to the monitor photodiode (131) and converted into an electrical data signal.

14. The Mach-Zehnder modulator (100) with control device according to one of claims 1 to 13, wherein the control circuit (116) is further configured to control the at least one modulation device (101, 102) at least partially, in particular based on the comparison of the optical partial signals by the signal comparing device.

15. A method for operating point control of a Mach-Zehnder modulator (100), comprising:
- providing a Mach-Zehnder modulator (100) with a control device, comprising:
-- an optical splitter device (105) configured to distribute an optical input signal in optical partial signals to at least two optical guide arms (103, 104),
-- at least one modulation device (101, 102) configured as an optical phase modulator for phase modulation of the optical input signal in at least one of the at least two optical guide arms (103, 104),
-- an optical combining device (107), the optical combining device (107) being configured to combine the optical partial signals of the at least two optical guide arms (103, 104);
-- a signal comparing device configured to compare the optical partial signals of the at least two optical guide arms (103, 104), the signal comparing device being arranged between the optical splitter device (105) and the at least one modulation device (101, 102),
-- at least one control modulation device (117, 117a) arranged in at least one of the at least two optical guide arms (103, 104), and
-- a control circuit (116), the control circuit (116) being configured to control an operating point of the Mach-Zehnder modulator (100) at least by controlling the at least one control modulation device (117, 117a) based on the comparison of the partial optical signals by the signal comparing device; and
- controlling the at least one control modulation device (117, 117a) based on the comparison of the optical partial signals by the signal comparing device.

## Revendications

1. Modulateur de Mach-Zehnder (100) avec dispositif de régulation pour la régulation de point de fonctionnement, comprenant :
- un modulateur de Mach-Zehnder (100) comprenant :
-- un dispositif diviseur optique (105) qui est conçu pour répartir un signal d'entrée optique en signaux partiels optiques sur au moins deux bras de guidage optiques (103, 104),
-- au moins un dispositif de modulation (101, 102) qui est conçu en tant que modulateur de phase optique pour la modulation de phase du signal d'entrée optique dans au moins un des au moins deux bras de guidage optiques (103, 104), et
-- un dispositif de combinaison optique (107), dans lequel le dispositif de combinaison optique (107) est conçu pour combiner les signaux partiels optiques des au moins deux bras de guidage optiques (103, 104) ; et
- un dispositif de régulation comprenant :
-- un dispositif de comparaison de signaux qui est conçu pour comparer les signaux partiels optiques des au moins deux bras de guidage optiques (103, 104), dans lequel le dispositif de comparaison de signaux est disposé entre le dispositif diviseur optique (105) et l'au moins un dispositif de modulation (101, 102),
-- au moins un dispositif de modulation par régulation (117, 117a) qui est disposé dans au moins un des au moins deux bras de guidage optiques (103, 104), et
-- un circuit de régulation (116), dans lequel le circuit de régulation (116) est configuré pour réguler un point de fonctionnement du modulateur de Mach-Zehnder (100) au moins par déclenchement de l'au moins un dispositif de modulation par régulation (117, 117a) en se basant sur la comparaison des signaux partiels optiques par le dispositif de comparaison de signaux.

2. Modulateur de Mach-Zehnder (100) avec dispositif de régulation selon la revendication 1, dans lequel l'au moins un dispositif de modulation par régulation (117, 117a) est disposé entre le dispositif diviseur optique (105) et l'au moins un dispositif de modulation (101, 102).

3. Modulateur de Mach-Zehnder (100) avec dispositif de régulation selon la revendication 1 ou 2, dans lequel le dispositif de comparaison de signaux comprend :
- au moins deux diviseurs de puissance (111, 112), dans lequel un diviseur de puissance (111, 112) des au moins deux diviseurs de puissance (111, 112) est disposé dans chacun des au moins deux bras de guidage optiques (103, 104), dans lequel chaque diviseur de puissance (111, 112) des au moins deux diviseurs de puissance (111, 112) est conçu pour dériver à chaque fois un signal de référence du signal partiel optique respectif ;
- un dispositif de combinaison de signaux de référence optiques (113) qui est connecté aux au moins deux diviseurs de puissance (111, 112) et est conçu pour convertir les au moins deux signaux de référence en au moins deux signaux de mesure ; et
- un dispositif photodétecteur qui est conçu pour recevoir les au moins deux signaux de mesure.

4. Modulateur de Mach-Zehnder (100) avec dispositif de régulation selon la revendication 3, dans lequel au moins un dispositif de modulation par régulation (117, 117a) de l'au moins un dispositif de modulation par régulation (117, 117a) est disposé dans un des au moins deux bras de guidage optiques (103, 104) entre un des au moins deux diviseurs de puissance (111, 112) et le dispositif diviseur optique (105).

5. Modulateur de Mach-Zehnder (100) avec dispositif de régulation selon une des revendications 3 à 4, dans lequel chacun des au moins deux diviseurs de puissance (111, 112) est conçu pour dériver au maximum 20 %, de préférence au maximum 5 %, de manière davantage préférée au maximum 2 %, de manière préférée entre toutes au maximum 1 % d'une puissance du signal partiel optique respectif.

6. Modulateur de Mach-Zehnder (100) avec dispositif de régulation selon une des revendications 3 à 5, dans lequel les au moins deux diviseurs de puissance (111, 112) sont réalisés de manière essentiellement identique ; et/ou
dans lequel chacun des au moins deux diviseurs de puissance (111, 112) est réalisé en tant que diviseur Y et/ou en tant que coupleur directif et/ou en tant qu'interféromètre multimode.

7. Modulateur de Mach-Zehnder (100) avec dispositif de régulation selon une des revendications 3 à 6, dans lequel le dispositif de combinaison de signaux de référence optiques (113) et le dispositif de combinaison optique (107) sont réalisés de manière essentiellement identique ; et/ou
dans lequel le dispositif diviseur optique (105) et/ou le dispositif de combinaison optique (107) et/ou le dispositif de combinaison de signaux de référence optiques (113) est réalisé en tant qu'interféromètre multimode.

8. Modulateur de Mach-Zehnder (100) avec dispositif de régulation selon une des revendications 3 à 7, dans lequel le dispositif photodétecteur présente au moins deux photodiodes (114, 115), dans lequel chacune des au moins deux photodiodes (114, 115) est conçue pour recevoir à chaque fois un des au moins deux signaux de mesure,
dans lequel chacune des au moins deux photodiodes (114, 115) présente une sortie de données de mesure qui est connectée au circuit de régulation (116).

9. Modulateur de Mach-Zehnder (100) avec dispositif de régulation selon une des revendications 3 à 7, dans lequel le dispositif photodétecteur est réalisé en tant que photodétecteur symétrique ou différentiel,
dans lequel le photodétecteur symétrique ou différentiel présente au moins une sortie de données de mesure qui est connectée au circuit de régulation (116).

10. Modulateur de Mach-Zehnder (100) avec dispositif de régulation selon une des revendications 1 à 9, dans lequel l'au moins un dispositif de modulation par régulation (117, 117a) est réalisé en tant que modulateur de phase thermo-optique.

11. Modulateur de Mach-Zehnder (100) avec dispositif de régulation selon une des revendications 1 à 10, dans lequel l'au moins un dispositif de modulation par régulation (117, 117a) comprend au moins deux dispositifs de modulation par régulation (117, 117a), dans lequel chacun des au moins deux bras de guidage optiques (103, 104) présente au moins un des au moins deux dispositifs de modulation par régulation (117, 117a).

12. Modulateur de Mach-Zehnder (100) avec dispositif de régulation selon une des revendications 1 à 11, dans lequel le dispositif de combinaison optique (107) comprend une sortie de signal de surveillance optique (130) qui est connectée à une photodiode de surveillance (131),
dans lequel la photodiode de surveillance (131) est conçue pour recevoir un signal de surveillance optique à la sortie de signal de surveillance optique (130) et acheminer au circuit de régulation (116) un signal de données de surveillance électrique se basant sur celui-ci,
dans lequel le circuit de régulation (116) est configuré pour réguler un point de fonctionnement du modulateur de Mach-Zehnder (100) par déclenchement de l'au moins un dispositif de modulation par régulation (117, 117a) en se basant sur la comparaison des signaux partiels optiques par le dispositif de comparaison de signaux et le signal de données de surveillance électrique de la photodiode de surveillance (131).

13. Modulateur de Mach-Zehnder (100) avec dispositif de régulation selon la revendication 12, dans lequel le dispositif de combinaison optique (107) comprend une sortie de signal de transmission optique (110),
dans lequel le modulateur de Mach-Zehnder (100) comprend un mode émetteur dans lequel un signal de transmission optique est généré en se basant sur le signal d'entrée optique à la sortie de signal de transmission optique (110), et présente un mode récepteur dans lequel le signal d'entrée optique est dirigé vers la photodiode de surveillance (131) et est converti en un signal de données électrique.

14. Modulateur de Mach-Zehnder (100) avec dispositif de régulation selon une des revendications 1 à 13, dans lequel le circuit de régulation (116) est en outre configuré pour déclencher l'au moins un dispositif de modulation (101, 102) au moins partiellement, notamment en se basant sur la comparaison des signaux partiels optiques par le dispositif de comparaison de signaux.

15. Procédé pour la régulation de point de fonctionnement d'un modulateur de Mach-Zehnder (100), comprenant :
- mise à disposition d'un modulateur de Mach-Zehnder (100) avec un dispositif de régulation, comprenant :
-- un dispositif diviseur optique (105) qui est conçu pour répartir un signal d'entrée optique en signaux partiels optiques sur au moins deux bras de guidage optiques (103, 104),
-- au moins un dispositif de modulation (101, 102) qui est conçu en tant que modulateur de phase optique pour la modulation de phase du signal d'entrée optique dans au moins un des au moins deux bras de guidage optiques (103, 104),
-- un dispositif de combinaison optique (107), dans lequel le dispositif de combinaison optique (107) est conçu pour combiner les signaux partiels optiques des au moins deux bras de guidage optiques (103, 104),
-- un dispositif de comparaison de signaux qui est conçu pour comparer les signaux partiels optiques des au moins deux bras de guidage optiques (103, 104), dans lequel le dispositif de comparaison de signaux est disposé entre le dispositif diviseur optique (105) et l'au moins un dispositif de modulation (101, 102),
-- au moins un dispositif de modulation par régulation (117, 117a) qui est disposé dans au moins un des au moins deux bras de guidage optiques (103, 104), et
-- un circuit de régulation (116), dans lequel le circuit de régulation (116) est configuré pour réguler un point de fonctionnement du modulateur de Mach-Zehnder (100) au moins par déclenchement de l'au moins un dispositif de modulation par régulation (117, 117a) en se basant sur la comparaison des signaux partiels optiques par le dispositif de comparaison de signaux ; et
- déclenchement de l'au moins un dispositif de modulation par régulation (117, 117a) en se basant sur la comparaison des signaux partiels optiques par le dispositif de comparaison de signaux.
